# EUROPÄISCHE PATENTSCHRIFT

(11) **EP 3 178 155 B1**
(45) Veröffentlichungstag und Bekanntmachung des Hinweises auf die Patenterteilung: **18.11.2020**
(21) Anmeldenummer: 15745492.7
(22) Anmeldetag: 04.08.2015
(51) Int. Cl.: H02K 19/02, H02K 19/14, H02K 1/24, H02K 15/00

(54) **ROTOR, RELUKTANZMASCHINE UND HERSTELLUNGSVERFAHREN FÜR ROTOR**
ROTOR, RELUCTANCE MACHINE AND MANUFACTURING METHOD FOR ROTOR
ROTOR, MACHINE À RÉLUCTANCE ET PROCÉDÉ DE FABRICATION POUR ROTOR

(30) Priorität: 04.08.2014 DE 102014215304
(43) Veröffentlichungstag der Anmeldung: 14.06.2017
(73) Patentinhaber: KSB SE & Co. KGaA, 67227 Frankenthal (DE)
(72) Erfinder: GONTERMANN, Daniel, 67227 Frankenthal (DE); JANJIC, Boris, 67227 Frankenthal (DE); KÖNEN, Michael, 67227 Frankenthal (DE); SCHAAB, Jochen, 67227 Frankenthal (DE); SCHUNK, Axel, 67227 Frankenthal (DE)
(86) Internationale Anmeldenummer: PCT/EP2015/067908
(87) Internationale Veröffentlichungsnummer: WO 2016/020363

(56) Entgegenhaltungen:
- EP-A1- 0 650 245
- EP-A1- 1 184 956
- US-A- 2 975 310

## Beschreibung

Die Erfindung betrifft einen Rotor für eine Reluktanzmaschine umfassend ein zylinderförmig aufgebautes weichmagnetisches Element, wobei das weichmagnetische Element Aussparungen zur Ausbildung von Flusssperren aufweist, wobei ein oder mehrerer Flusssperren zumindest teilweise mit einem Füllmaterial gefüllt sind, das Füllmaterial dieser Flusssperren an den Rotorumfang heranreicht und einen Teil des Rotorumfangs bildet. Weiterhin betrifft die Erfindung eine Reluktanzmaschine mit entsprechendem Rotor sowie ein Herstellungsverfahren für einen derartigen Rotor.

Üblicherweise werden Rotoren für Synchronreluktanzmaschinen mit einem zylinderförmigen weichmagnetischen Element ausgestattet, das koaxial auf der Rotorachse angeordnet wird. Zur Ausbildung mindestens eines Polpaares bzw. Lückenpaares umfasst das weichmagnetische Element Flussleit- sowie Flusssperrabschnitte, die sich gegenseitig in einer unterschiedlich stark ausgeprägten magnetischen Permeabilität unterscheiden. Der Abschnitt mit großer magnetischer Leitfähigkeit wird bekannter Weise als d-Achse des Rotors und der Abschnitt mit vergleichsweise geringerer Leitfähigkeit als q-Achse des Rotors gekennzeichnet. Ein optimaler Wirkungsgrad des Reluktanzmotors und damit eine optimale Drehmomentausbeute stellt sich dann ein, wenn die d-Achse eine möglichst große magnetische Leitfähigkeit und die q-Achse eine möglichst niedrige magnetische Leitfähigkeit aufweist.

Erreicht wird diese Voraussetzung oftmals durch die Ausbildung von mehreren mit Luft gefüllten Aussparungen im weichmagnetischen Element entlang der q-Achse, wodurch der magnetische Fluss in Richtung der q-Achse gehemmt wird und folglich die Permeabilität sinkt. Das so aufgebaute weichmagnetische Element wird anschließend auf einer Rotorwelle aufgebracht und axial sowie tangential fixiert.

Aus Stabilitätsgründen werden ein oder mehrere Flusssperren durch radial orientierte innere Stege zweigeteilt. Die Steganordnung erhöht die Festigkeit des Blechpaketes, was insbesondere die Rotorstabilität im Betrieb optimiert. Die Breite der Stege ist gering, um den Einfluss auf die Permeabilität so gering wie möglich zu halten. Auch am äußeren Rotorumfang verlaufen Stege, die die Flusssperren vom Rotorumfang abgrenzen.

Synchronreluktanzmotoren werden regelmäßig über einen Frequenzumrichter gespeist, wodurch sich die Drehzahl von 0 bis zur Betriebszahl hochführen und während des Betriebs verstellen lässt. Insbesondere kann die Drehzahl zum Anlaufen des Motors schrittweise erhöht werden. Wird der Synchronreluktanzmotor hingegen am starren Netz betrieben, ist der Einsatz eines Anlaufkäfigs erforderlich, um einen asynchronen Anlauf zu ermöglichen. Sobald sich die Drehzahl des Rotors der synchronen Drehzahl annähert, überwiegt das Reluktanzmoment und der Rotor läuft synchron mit dem umlaufenden Drehfeld. Aufbau und Herstellung konventioneller Anlaufkäfige, bestehend aus Leiterstäben und Kurzschlussringen, waren bisher jedoch vergleichsweise aufwendig und teuer.

Die US 2 975 310 A offenbart einen gattungsgemäßen Rotor eines Synchronreluktanzmotors und ein Verfahren zur Herstellung eines Synchronreluktanzmotors. Die EP 1 184 956 A1 zeigt einen Permanentmagnetrotor mit in Teilbereichen eingebetteten Magneten.

Die Aufgabe der vorliegenden Erfindung ist es, einen alternativen Rotoraufbau aufzuzeigen, der sich durch ein optimiertes Verhältnis der magnetischen Widerstände entlang der d- und q-Achse auszeichnet und dennoch ein stabiles Rotordesign gewährleistet. Gelöst wird diese Aufgabe durch einen Rotor gemäß den Merkmalen des Anspruchs 1. Vorteilhafte Ausgestaltungen des Rotors sind Gegenstand der abhängigen Unteransprüche.

Erfindungsgemäß ist hierbei vorgesehen, dass ein oder mehrerer Flusssperren zumindest teilweise mit einem geeigneten Füllmaterial ausgefüllt ist/sind. Das Füllmaterial dieser Flusssperren reicht unmittelbar an den Außenumfang des Rotors heran und bildet demnach einen Teil des Rotorumfangs. Auf den konventionellen Stegverlauf am Rotorumfang kann verzichtet werden, der Rotorumfang wird folglich zumindest abschnittsweise durch das Füllmaterial innerhalb der ein oder mehreren am Rotorumfang angrenzenden Flusssperren gebildet.

Da die Stege üblicherweise aus dem Material des Rotors, d. h. aus einem magnetisch leitfähigen Material gebildet sind, vorzugsweise Blech bzw. ein gestapeltes Blechpaket, hat deren Ausbildung im Bereich der q-Achse eine nachteilige Wirkung auf den magnetischen Widerstand entlang der q-Achse, d.h. dies führt zu einer Zunahme der Permeabilität entlang der q-Achse. Dadurch muss eine für den Motorbetrieb nachteilige Beeinflussung des Widerstandsverhältnisses zwischen q- und d-Achse in Kauf genommen werden. Durch die erfindungsgemäße Ausgestaltung des Rotors, d. h. die Aussparung zumindest eines Teils der üblicherweise am Außenumfang vorgesehenen Stege kann das Widerstandsverhältnis zwischen d- und q-Achse für den Rotorbetrieb optimiert werden, um ein höheres Drehmoment zu erreichen. Dennoch wird durch das vorgesehene Füllmaterial im Außenbereich der jeweiligen Flusssperren ein stabiles Rotordesign gewährleistet.

Erfindungsgemäß sind die Flusssperren des Rotors derart zumindest bereichsweise mit dem Füllmaterial gefüllt, sodass sich ein innerer Bereich mit ungefüllten Flusssperren bzw. nicht befüllten Flusssperrenbereichen und ein äußerer Bereich mit gefüllten Flusssperren bzw. gefüllten Flusssperrenbereichen ergibt. Denkbar ist es beispielsweise, dass sich die Teilung des inneren und äußeren Bereichs durch die Anordnung ein oder mehrerer Stege ergibt, wobei der Verlauf der einzelnen Stege einen geschlossenen Linienzug bildet, der den Rotor in radialer Richtung in einen inneren und einen äußeren Rotorbereich unterteilt. Die Flusssperrenabschnitte des äußeren Rotorbereichs sind Großteils, bevorzugt alle, mit einem entsprechenden Füllmaterial gefüllt. Auch die Flusssperren bzw. Flusssperrenbereiche des inneren Rotorbereichs können gefüllt sein, vorzugsweise mit einem magnetisch-nichtleitenden und/oder elektrisch-nichtleitenden Füllmaterial.

Durch Verwendung eines geeigneten Füllmaterials, d.h. eines elektrisch leitenden Füllmaterials, kann mit Hilfe des äußeren Rotorbereichs ein Anlaufkäfig gebildet werden. Ein den Rotor nutzender Reluktanzmotor lässt sich folglich ohne Frequenzumrichter als sogenannter "Line-Start-Motor" betreiben. In der Regel wird der gebildete Anlaufkäfig durch in Axialrichtung endseitig befestigte Kurzschlussringe kurzgeschlossen. Der dadurch entstehende Anlaufkäfig arbeitet nach dem bekannten Prinzip der bei Asynchronmotoren eingesetzten Anlaufhilfen.

Weiterhin ist es denkbar, dass das verwendete elektrisch-leitende Füllmaterial durch seine magnetisch nicht-leitenden Eigenschaften gekennzeichnet ist. Dadurch wird eine nachteilige Beeinflussung der Permeabilität im Flusssperrenabschnitt vermieden.

Besonders bevorzugt eignet sich als Füllmaterial Aluminium oder eine Aluminiumlegierung, da derartige Materialien die vorgenannten Eigenschaften aufweisen. Es sind jedoch auch andere Materialen, die sich durch entsprechende Eigenschaften auszeichnen, denkbar.

Idealerweise sind alle unmittelbar an den äußeren Roterumfang angrenzenden Flusssperren zumindest in ihrem Umfangsbereich mit dem Füllmaterial gefüllt, um eine hohe Stabilität des Rotorpaketes zu erreichen und gleichzeitig sämtliche Stegabschnitte im Bereich der an den Umfang angrenzenden Flusssperren auszusparen, um damit ein nahezu optimales Widerstandsverhältnis zwischen q- und d-Achse zu ermöglichen.

Erfindungsgemäß ist vorgesehen, dass ein oder mehrere Flusssperren durch ein oder mehrere Stege zwei- oder mehrgeteilt sind. Die Ausbildung dieser Stege wirkt sich, wie bereits vorstehend erläutert, nachteilig auf die Eigenschaften der Permeabilität im jeweiligen Rotorabschnitt aus. Aus diesem Grund soll die Dimensionierung, insbesondere die Stärke der ausgebildeten Stege möglichst klein gehalten werden, um den Einfluss auf das Widerstandsverhältnis soweit wie möglich zu begrenzen. Bei der Einbringung des verwendeten Füllmaterials, insbesondere des Aluminiums bzw. der Aluminiumlegierung, kann jedoch ein gewisser Druck auf die Stege einwirken, was unter Umständen zu Beschädigungen oder zum Durchbrechen der Stege führen kann. Für den optimalen Rotorbetrieb muss daher ein geeignetes Mittelmaß bei der Stegdimensionierung gefunden werden. Vor diesem Hintergrund ist erfindungsgemäß eine gekrümmte Kantenform der ein oder mehreren Stege vorgesehen. Die Kantenkrümmung führt zu einer erhöhten Widerstandsfähigkeit der Stege beim Einpressen des Füllmaterials, ohne jedoch nachteilig eine Verbreiterung der Stege und eine dadurch bedingte größere Einflussnahme auf die Permeabilität des Rotors in Kauf nehmen zu müssen. Besonders bevorzugt ist eine bogenförmige Kantenform.

Weiterhin ist es äußerst vorteilhaft, wenn die wenigstens eine, an einem gefüllten Bereich der Flusssperre angrenzende gekrümmte Kante in den gefüllten Bereich der Flusssperre hinein gewölbt ist. In diesem Fall wird die Widerstandsfähigkeit des Stegs während des Füllvorgangs deutlich erhöht. Die Form der an den nicht gefüllten Bereich der Flusssperre angrenzenden Kante ist weniger relevant und kann beliebig ausgeführt sein. Bevorzugt ist diese jedoch ebenfalls gekrümmt, wobei sich die Kante aus dem nicht gefüllten Bereich der Flusssperre heraus wölbt.

Die vorliegende Erfindung umfasst weiterhin eine Reluktanzmaschine, insbesondere eine Synchronreluktanzmaschine, mit wenigstens einem Rotor gemäß der vorliegenden Erfindung bzw. einer vorteilhaften Ausgestaltung des Rotors gemäß der vorliegenden Erfindung. Die Reluktanzmaschine zeichnet sich folglich durch dieselben Vorteile und Eigenschaften aus wie der erfindungsgemäße Rotor bzw. eine vorteilhafte Ausgestaltung des erfindungsgemäßen Rotors, weshalb an dieser Stelle auf eine wiederholende Beschreibung verzichtet wird. Durch die erfindungsgemäße Ausgestaltung des Rotors, insbesondere die Lage des eingebrachten Füllmaterials, kann nicht nur ein Anlaufkäfig realisiert, sondern gleichzeitig durch Reduzierung der Stege eine verbessertes Drehmoment des Rotors erzielt werden.

Die Maschine dient vorzugsweise für den Pumpenantrieb. Die Erfindung beinhaltet folglich auch eine Pumpe mit einem Reluktanz- bzw. Synchron-Reluktanzmotor gemäß der vorliegenden Erfindung.

Ein weiterer Aspekt der vorliegenden Erfindung betrifft ein Herstellungsverfahren für den erfindungsgemäßen Rotor gemäß des unabhängigen Anspruchs 10. Hierbei wird der Rotor zunächst mit äußeren Stegen gefertigt und das Füllmaterial in die vorgesehenen Flusssperren des weichmagnetischen Rotorelementes eingebracht. Unter den äußeren Stegen werden dabei diejenigen Stege verstanden, die aus dem weichmagnetischen Element gebildet sind und die im Bereich des Rotorumfangs vorliegen, d.h. die vorgesehenen Aussparrungen im weichmagnetischen Element zur Ausbildung der Flusssperren reichen nicht unmittelbar an den Rotorumfang heran, sondern sind durch die Stege vom Außenumfang beabstandet. Der Rotorumfang wird demnach vollständig durch das weichmagnetische Element gebildet.

Nach Einbringung des Füllmaterials in die Flusssperren kann eine ausreichende Stabilität des Rotorpaketes gewährleistet werden, weshalb erfindungsgemäß im Anschluss die äußeren Stege entfernt werden. Idealerweise werden die äußeren Stege im Bereich der in Radialrichtung des Rotors außen liegenden Bereiche der Flusssperren entfernt, d. h. das Füllmaterial der Flusssperren grenzt unmittelbar an den Rotorumfang an und bildet somit ein Teil des Rotorumfangs.

Das Rotorpaket besteht in der Regel aus einem gestapelten Blechpaket und wird bevorzugt durch Drehen gefertigt. Durch Überdrehen des Rotorpaketes können Materialschichten des weichmagnetischen Elementes am Rotorumfang entfernt und damit die äußeren Stege im Bereich der an den Umfang anschließenden äußeren Flusssperrenabschnitte abgetragen werden.

Weiterhin ist es vorteilhaft, wenn das verwendete Füllmaterial per Gussverfahren, insbesondere per Druckgussverfahren, in die Flusssperren eingebracht, insbesondere eingepresst wird.

Weitere Vorteile und Eigenschaften der Erfindung sollen im Folgenden anhand der in den Figuren dargestellten Ausführungsbeispiele näher erläutert werden. Es zeigen:
- Figur 1:: ein Rotorblech eines erfindungsgemäßen Rotors gemäß einer ersten Ausführungsform,
- Figur 2:: Darstellungen des Rotorbleches gemäß Figur 1 während einzelner Verfahrensschritte des erfindungsgemäßen Herstellungsverfahrens,
- Figur 3:: eine Detailaufnahme des erfindungsgemäßen Rotorbleches gemäß Figur 1,
- Figur 4:: ein Darstellung eines Rotorbleches eines ersten alternative Rotors,
- Figur 5:: ein dritte Darstellung eines Rotorblech eines zweiten alternativen Rotors und
- .Figur 6:: eine Diagrammdarstellung zur Verdeutlichung des Zusammenhangs zwischen Flächenverhältnis und Betriebsverhalten des Rotors bzw. der Reluktanzmaschine.

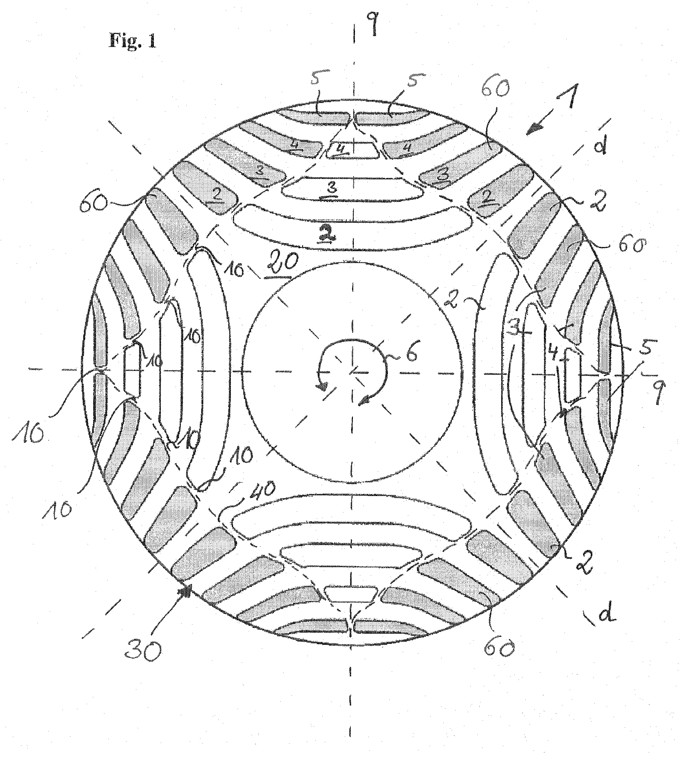

Figur 1 zeigt eine Draufsicht auf ein erfindungsgemäßes Rotorblech 1. Für den Aufbau des erfindungsgemäßen Rotors wird eine Vielzahl derartiger Bleche 1 in axialer Richtung, d.h. entlang der Rotationsachse 6, aufeinander gestapelt. Zur Vereinfachung der Darstellung ist der Stator nicht abgebildet. Das Rotorblech 1 verfügt über mehrere Aussparungen 2, 3, 4, 5, die die Funktion von Flusssperren übernehmen und durch deren Anordnung ein vierpoliger Rotor gebildet wird, dessen magnetischer Fluss in den Bereichen mit den Flusssperren 2, 3, 4, 5 gehemmt ist. Allgemein wird der Bereich mit hoher magnetischer Leitfähigkeit als d-Achse und der Bereich geringerer magnetischer Leitfähigkeit als q-Achse gekennzeichnet. Das zusammengesetzte Blechpaket wird auf einer nicht dargestellten Rotorwelle montiert. Das Rotorblech zeigt also vier Flusssperrenabschnitte, wobei die Flusssperren in diesen Bereichen identisch zueinander aufgebaut sind. Die Flusssperren lassen sich als bananenförmig beschreiben, deren Enden in Richtung des Rotorumfangs gekrümmt sind und an den Umfang heranreichen.

Die dargestellte Rotorkonstruktion unterscheidet sich von dem konventionellen Design allerdings in der Anordnung der einzelnen Stege 10, durch welche die einzelnen Flusssperren 2, 3, 4, 5 in unterschiedliche Abschnitte zwei- oder mehrgeteilt werden. Kennzeichnend ist, dass die radial innen liegenden Flusssperren 2, 3, 4 jedes Kreissektors durch zwei Stege 10 dreigeteilt werden, während die in Radialrichtung äußerste Flusssperre 5 nur durch einen Steg 10 zweigeteilt wird.

Die Anordnung der einzelnen Stege 10 sorgt nicht nur für eine verbesserte Blechstabilität während des Rotorbetriebs, sondern unterteilt zudem das Rotorblech 1 in einen inneren Teilbereich 20 sowie einen äußeren Teilbereich 30. Zur Verdeutlichung der Bereichsteilung ist die kreisförmige gestrichelte Linie 40 eingezeichnet, die den Grenzverlauf zwischen dem inneren und dem äußeren Rotorbereich 20, 30 andeutet. Die Anzahl der innen im Bereich 20 liegenden Flusssperren bzw. innenliegenden Flusssperrenbereiche ist grundsätzlich variabel und das Größenverhältnis des inneren und äußeren Bereichs 20, 30 nicht Gegenstand dieser Erfindung.

Die außen liegenden Magnetflusssperren 5 und die im Bereich 30 liegenden Teilbereiche der Flusssperren 2, 3, 4 dienen zur Ausbildung eines Anlaufkäfigs. Zu diesem Zweck werden beim Rotoraufbau stirnseitig nicht dargestellte Kurzschlussringe befestigt, diese beispielsweise unverändert vom Anlaufkäfig einer Asynchronmaschine übernommen werden können. Zusätzliche Vorkehrungen für einen Anlaufkäfig, wie die oftmals eingelassenen Metallstäbe, können dadurch entfallen.

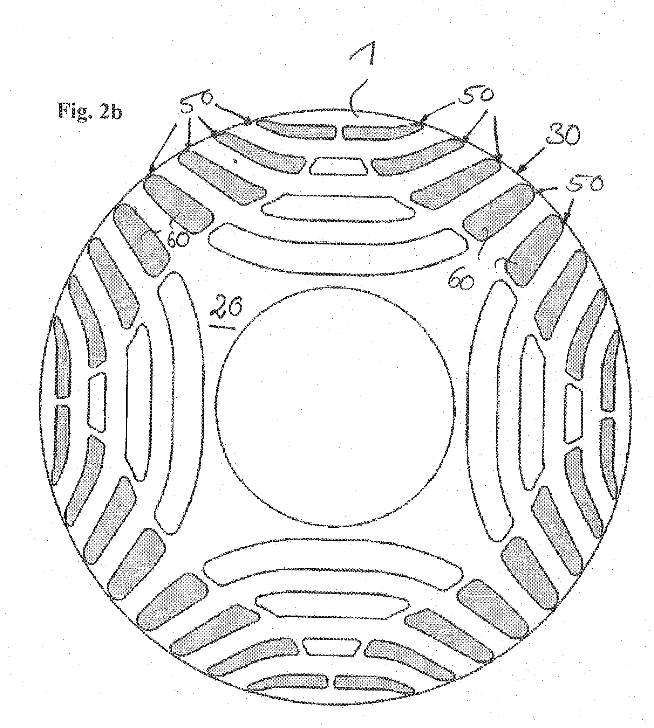

Zumindest die Bereiche der Flusssperren des äußeren Rotorbereiches 30 sind mit einem elektrischen-leitenden und magnetischen-nichtleitenden Material gefüllt, insbesondere mit einem Füllstoff aus Aluminium bzw. einer Aluminiumlegierung. In der Darstellung der Figur 1 und 2b ist dies durch die graue Füllfarbe 60 verdeutlicht. Die im Bereich 20 liegenden Flusssperrenbereiche der Flusssperren 2, 3, 4 können entweder mit einem magnetisch-nichtleitenden Material gefüllt sein oder lediglich Luft beinhalten. Der verwendete Füllstoff sollte vorzugsweise nicht oder schlecht elektrisch leitend sein.

Die Flusssperrenbereiche des äußeren Rotorabschnittes 30 reichen in radialer Richtung unmittelbar an den Außenumfang des Rotors heran, sodass der Rotorumfang teilweise von dem das Aluminium bzw. die Aluminiumlegierung umfassenden Füllmaterial gebildet wird. Die bisher vorgesehenen Stege am Rotorumfang sind nicht mehr vorhanden, wodurch sich der magnetische Widerstand des Flusssperrabschnittes erhöht und das Verhältnis zwischen q- und d-Achse optimiert wird. Durch die Füllung der an den Rotorumfang angrenzenden Flusssperren bzw. Flusssperrenbereiche lassen sich die bisher vorgesehenen Stege erst entfernen ohne nennenswerte Stabilitätseinbußen des Rotorpaketes in Kauf nehmen zu müssen. Grundsätzlich müssen nicht alle außenliegenden und an den Rotorumfang angrenzenden Flusssperren bzw. Flusssperrenbereiche gefüllt sein. Für den Gedanken der vorliegenden Erfindung ist es ausreichend, die ein oder mehrere Flusssperren in Nähe des Umfangsbereichs auszufüllen, um auf die nachteiligen Stege in diesem Bereich zu verzichten. Bereits dadurch ergibt sich ein verbessertes Verhältnis der magnetischen Widerstände in d- und q-Achse, was zu einer Erhöhung des resultierenden Reluktanzmomentes des den Rotor verwendenden Synchronreluktanzmotors führt. Die Verwendung eines geeigneten Füllstoffes zur Ausbildung eines Anlaufkäfigs und die vorbeschriebene Steganordnung der Stege 10 ist lediglich optional.

Die Einbringung des Füllmaterials in die Flusssperren 5 sowie die außen liegenden Bereiche der Flusssperren 2, 3, 4 ist auf unterschiedliche Art und Weise möglich. Es bietet sich die Einbringung per Guss an. Selbstverständlich können die Füllmaterialen auch als Feststoff in die Aussparungen 2, 3, 4, 5 eingesetzt werden.

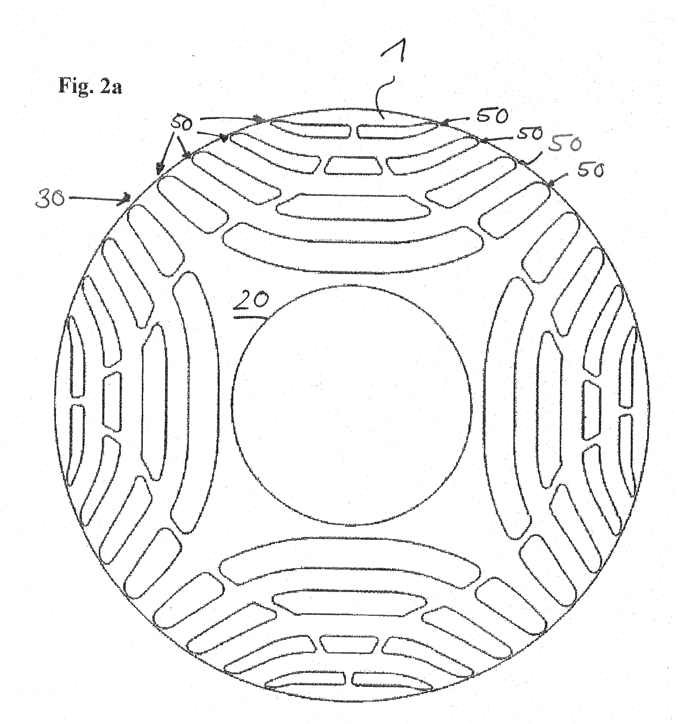

Anhand der Figuren 2a, 2b soll nunmehr das Herstellungsverfahren des erfindungsgemäßen Rotors verdeutlicht werden. Die Rotorbleche 1 des aus einzelnen Blechen gestapelten Blechpaketes des Rotors werden mit der vorbeschriebenen Flusssperrenanordnung gefertigt. Die inneren Stege 10, d. h. die Stege, die die einzelnen Flusssperren unterteilen, und nicht im Bereich des Rotorumfangs liegen, bilden die bereits beschriebene bekannte Linie 40, die den Rotor in einen inneren und äußeren Rotorbereich 20, 30 unterteilt. Das Rotorblech 1 wird jedoch zunächst mit äußeren Stegen 50 gefertigt, die in der Darstellung gemäß Figur 2a ersichtlich sind.

Im Anschluss werden die Flusssperrenabschnitte, die im äußeren Rotorbereich 30 liegen, mit Aluminium bzw. einer Aluminiumlegierung ausgegossen, wobei hier im Wesentlichen ein Aludruckgussverfahren eingesetzt wird. Hierbei wird das Aluminium bzw. die Aluminiumlegierung in die Flusssperrenabschnitte des äußeren Rotorbereichs 30 eingepresst. Es entsteht ein Rotorblech gemäß der Darstellung der Figur 2b.

In einem nachfolgenden Verfahrenschritt wird der Rotor überdreht, so dass das Blech an Durchmesser verliert und der Umfang schrumpft. Die die äußeren Stege 50 bildende Materialschicht verschwindet und beide Enden der bananenförmigen Flusssperren 2, 3, 4, 5 grenzen unmittelbar an den Rotorumfang an, d.h. das Aluminium bzw. die Aluminiumlegierung liegt offen zum Umfang und bildet einen Teil des Rotorumfangs. Das Ergebnis entspricht der Darstellung gemäß Figur 1. Durch das Verschwinden der jeweiligen Stege 50 in diesem Bereich wird die Permeabilität entlang der q-Achse reduziert und damit das Verhältnis zwischen q- und d-Achse optimiert. Weiterhin wird durch das Vorhandensein des Aluminiumkäfigs im Bereich des äußeren Rotorabschnittes 30 die mechanische Festigkeit auch ohne diese äußeren Stege 50 des Rotorblechpaketes erreicht.

Auch die inneren Stege 10 wirken sich negativ auf das Verhältnis der Permeabilität zwischen d- und q-Achse aus, weshalb die Anzahl und der Materialstärke gerne so klein wie möglich gehalten werden sollte. Die inneren Stege 10 sind jedoch zur Gewährleistung der Rotorstabilität notwendig. Während des Einbringens bzw. Einpressens des Füllmaterials, d.h. des Aluminiums bzw. der Aluminiumlegierung, in den Flusssperren 5 bzw. den Flusssperrenbereichen 2, 3, 4 im äußeren Rotorsegment 30 wirken hohe Kräfte auf die Stege 10 der zu füllenden Flusssperren, wodurch Beschädigungen der inneren Stege 10 auftreten können.

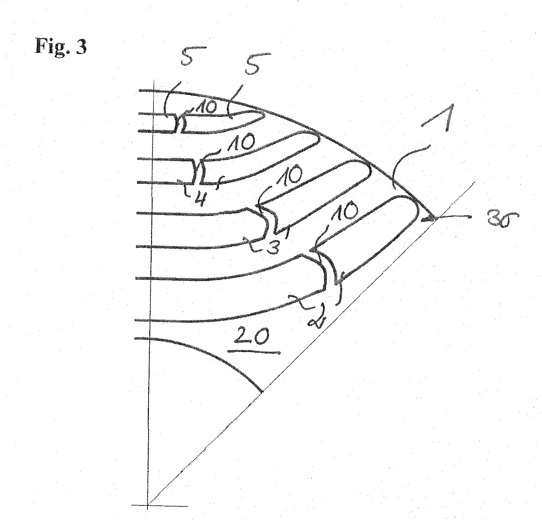

Anstatt die Stege 10 stärker zu dimensionieren werden diese nun bogenförmig ausgeführt, was deutlich der Detailaufnahme der Figur 3 zu entnehmen ist. Diese Aufnahme zeigt ein Achtel des Rotorbleches der Figur 1. Der übrige Rotorbereich ist symmetrisch zur Darstellung der Figur 3 ausgeführt.

Die bogenförmigen Rippen 10 stabilisieren den Rotor während des Aludruckgusses. In die im äußeren Bereich 30 liegenden Flusssperren 5 sowie Flusssperrenbereiche der Flusssperren 2, 3, 4 wird mit hohem Druck Aluminium eingepresst, während innen normaler Umgebungsdruck herrscht. Dadurch wird in den bogenförmigen Rippen eine Druckspannung aufgebaut, welche den Rotor stabilisiert. Einem Einfallen der Rotorstruktur kann damit effektiv entgegen gewirkt werden.

Insbesondere zeigt die bogenförmige Rippenstruktur eine Wölbung in den gefüllten Flusssperrenbereich hinein, sodass der Druck des Aludruckgusses dem Bogen entgegenwirkt. Damit kann die Stärke der inneren Rippen 10 weiter reduziert werden, wodurch diese dennoch dem hohen Druck des Aluminiums beim Gießen standhalten können.

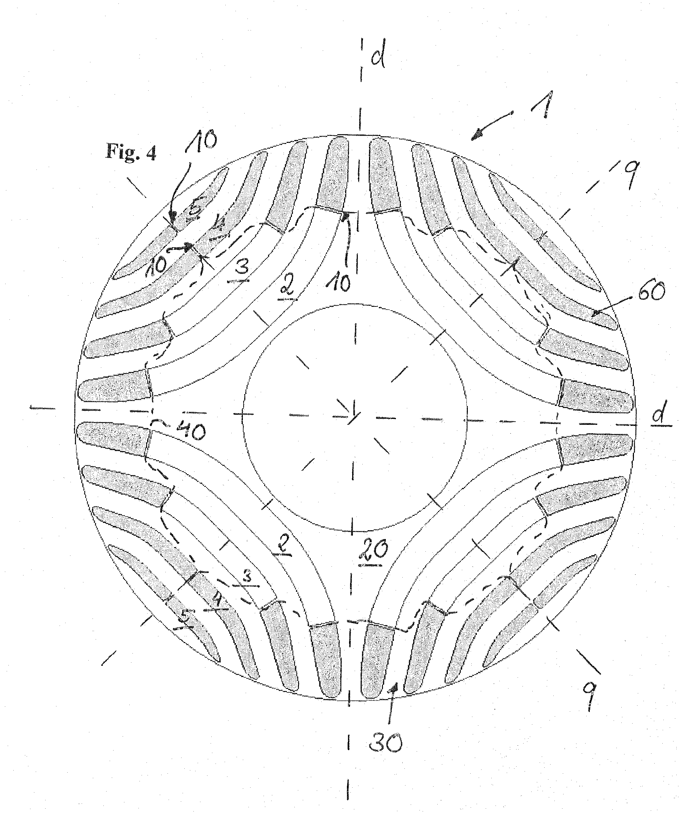

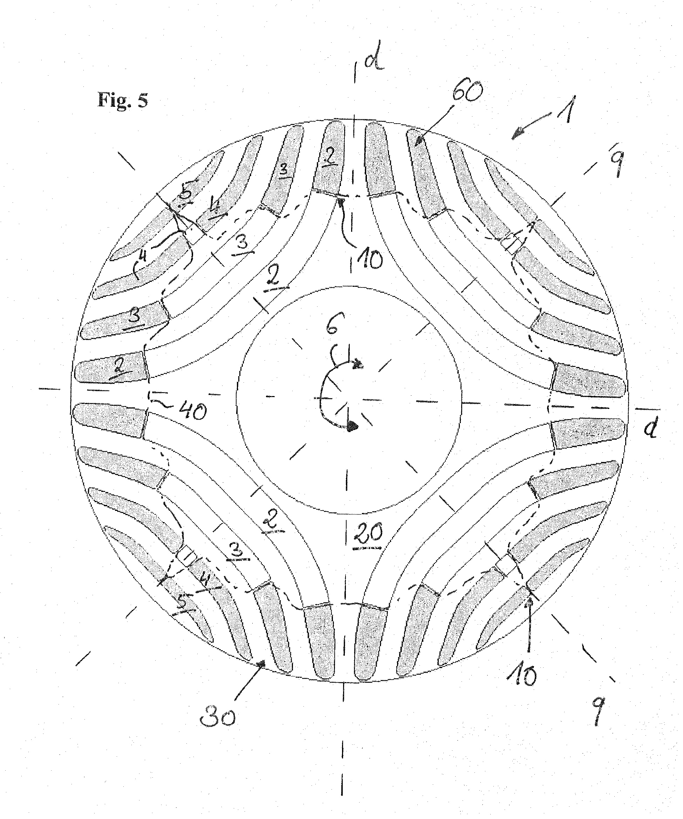

Im nachfolgenden werden optionale Merkmale eines Rotors beschrieben, die nicht als wesentliche Merkmale der Erfindung zu verstehen sind. Im Ausführungsbeispiel der Figur 1 sind die Bereiche der Flusssperren des äußeren Rotorbereiches 30 mit einem elektrisch leitenden und magnetisch nichtleitenden Material gefüllt, insbesondere mit einem Füllstoff aus Aluminium bzw. einer Aluminiumlegierung. Ergänzende Varianten sind den Figuren 4, 5 zu entnehmen. In den Darstellungen der Figuren 1 sowie 4, 5 ist das Aluminium bzw. die Legierung durch die graue Füllfarbe 60 verdeutlicht. Die im Bereich 20 liegenden Flusssperrenbereiche der Flusssperren 2, 3, 4 können entweder mit einem magnetisch nichtleitenden Material gefüllt sein oder lediglich Luft beinhalten. Der verwendete Füllstoff sollte vorzugsweise nicht oder schlecht elektrisch leitend sein.

Für das Anlaufverhalten des Rotors, d.h. das Synchronisieren der Drehzahl mit der Netzfrequenz, in einem Synchron-Reluktanzmotor ist nun das Verhältnis der Fläche des ausgefüllten Bereichs der Flusssperren 2, 3, 4, 5 zu der Fläche des nicht ausgefüllten Bereichs der Flusssperren 2, 3, 4 von Bedeutung. Bei zu geringer Füllfläche ist der gebildete Anlaufkäfig zu klein, ein belasteter Rotor kann nicht ohne mechanische Unterstützung anlaufen. Ist die Füllmenge zu groß gewählt, nimmt die Schwungmasse nachteilig zu und das Betriebsverhalten des Motors verschlechtert sich ebenfalls. Es gilt daher ein optimales Verhältnis zu suchen, insbesondere für die Anwendung des Rotors zum Einsatz in einem Antriebsmotor einer Pumpe.

Für die Definition wird die im Blechquerschnitt gezeigte Fläche des für alle Flusssperren 2, 3, 4, 5 verwendeten Füllmaterials summiert und ins Verhältnis zur Fläche der entsprechend nicht ausgefüllten Bereiche aller Flusssperren 2, 3, 4 gesetzt. In den Darstellungen der Figuren 1 und 4, 5 entspricht dies dem Verhältnis aller grau gezeichneten Flächen 60 innerhalb der Flusssperren 2, 3, 4, 5 zum Verhältnis der nicht grau hinterlegten Flächen innerhalb der Flusssperren 2, 3, 4.

Als geeignetes Verhältnis der Fläche des ausgefüllten Bereichs der Flusssperren 2, 3, 4, 5 zu der Fläche des Bereichs der nicht ausgefüllten Flusssperren 2, 3, 4 hat sich ein Wert von mindestens 0,2 gezeigt. Bevorzugt liegt das Verhältnis im Bereich zwischen 0,2 und 3, besonders bevorzugt im Bereich zwischen 0,3 und 3, idealerweise im Bereich von 0,75 bis 1.5.

Weiterhin sind die Flächen der ausgefüllten Bereiche der Flusssperren 2, 3, 4 untereinander angepasst, d.h. identisch gewählt. Für die äußerste Flusssperre 5 kann dieses Kriterium unter Umständen nicht eingehalten werden, da diese einen flächenmäßig zu kleinen Füllraum bietet.

Als weiteres Kriterium gilt, dass das Verhältnis zwischen ausgefüllten und nicht ausgefüllten Bereich der in Radialrichtung des Rotors innenliegenden Flusssperre 2 mindestens 0,2 beträgt, bevorzugt im Bereich zwischen 0,2 und 2, besonders bevorzugt im Bereich zwischen 0,35 und 0,8 und idealerweise zwischen 0,35 und 0.6 liegt. Im Ausführungsbeispiel der Figur 4 beträgt dieses Verhältnis 0,5, während für das Ausführungsbeispiel der Figur 5 ein kleineres Verhältnis für die innerste Flusssperre 2 angenommen wurde, beispielsweise von etwa 0,3. Für das Ausführungsbeispiel der Figur 1 wurde ein Verhältnis zwischen 0,3 und 0,5 angesetzt.

Die Fläche der ausgefüllten Bereiche der in Radialrichtung weiter außen liegenden teilgefüllten Flusssperren 3, 4 ist an die Fläche des ausgefüllten Bereichs der innenliegenden Flusssperre 2 größenmäßig angepasst bzw. nahezu identisch zu dieser.

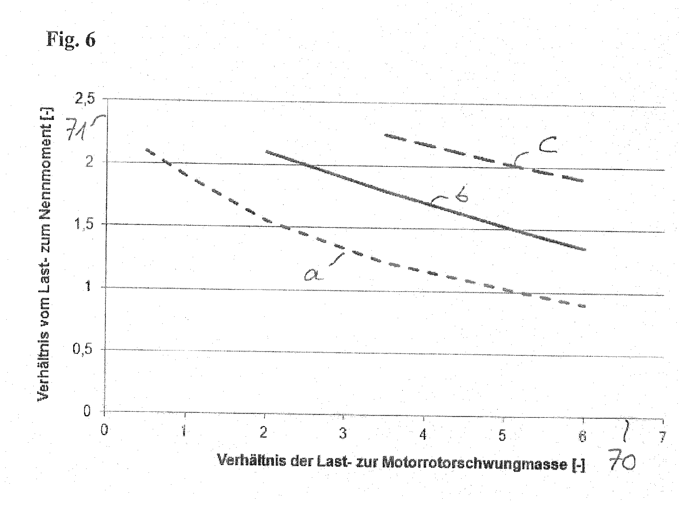

In Figur 6 sind die Intrittfall-Grenzkennlinien für unterschiedliche Flächenverhältnisse bei Synchronreluktanzrotoren dargestellt. Im dargestellten Diagramm entspricht die Achse 70 dem Verhältnis der Last- zur Motorschwungmasse und die Achse 71 dem Verhältnis der Last zu Nennmoment. Die Flächen unter den jeweiligen Linien a, b, c definieren die Bereiche, in denen der Line-Start-Synchronreluktanzmotor sicher anläuft bzw. synchronisiert werden kann. Die Linie a kennzeichnet dabei das Betriebsverhalten eines nicht unter die Erfindung fallenden Rotors, dessen Blechgeometrie zwar den Ausführungsbeispielen der Figuren 1 und 4, 5 entspricht, dessen Flusssperren jedoch alle vollständig mit einem Aluminium bzw. einer Aluminiumlegierung gefüllt sind.

Die Linie b zeigt das Betriebsverhalten des erfindungsgemäßen Rotors der Figur 5 mit einem Flächenverhältnis der innersten Flusssperre 2 von 0,3. Die oberste Kennlinie c ist dem Rotor aus dem Ausführungsbeispiel der Figur 4 zuzuordnen mit einem Flächenverhältnis der innersten Flusssperre von 0,5.

Aus der Figur 6 ist zu sehen, dass durch die gezielte Optimierung des Flächenverhältnisses eine deutliche Verbesserung der Anlauffähigkeit des Line-Start-Reluktanzmotors durch die Vergrößerung des Bereiches, in dem der Motor sicher synchronisiert bzw. der Fläche unter den Linien b, c erreicht werden kann.

## Patentansprüche

1. Rotor für eine Reluktanzmaschine umfassend ein zylinderförmig aufgebautes weichmagnetisches Element, wobei das weichmagnetische Element aus Rotorblechen aufgebaut ist, die Aussparungen zur Ausbildung von Flusssperren (2, 3, 4, 5) aufweisen, wobei ein oder mehrerer Flusssperren (2, 3, 4, 5) zumindest teilweise mit einem Füllmaterial gefüllt sind, das Füllmaterial dieser Flusssperren (2, 3, 4, 5) an den Rotorumfang heranreicht und einen Teil des Rotorumfangs bildet, **dadurch gekennzeichnet, dass** die Flusssperren (2, 3, 4, 5) des Rotors derart zumindest teilweise mit dem Füllmaterial gefüllt sind, so dass sich ein radial innerer Rotorbereich (20) mit ungefüllten Flusssperrenbereichen bzw. ungefüllten Flusssperren (2, 3, 4, 5) und ein radial äußerer Bereich (30) mit befüllten Flusssperrenbereichen bzw. Flusssperren (2, 3, 4, 5) ergibt, wobei ein oder mehrere Flusssperren (2, 3, 4, 5) durch ein oder mehrere Stege (10) zwei-oder mehrgeteilt sind, wobei zumindest ein Teil dieser Stege (10) eine an die Flusssperre (2, 3, 4, 5) angrenzende gekrümmte Kante aufweist, insbesondere eine bogenförmige Kante aufweist.

2. Rotor nach Anspruch 1, **dadurch gekennzeichnet, dass** das Füllmaterial der Flusssperren (2, 3, 4, 5), insbesondere der im äußeren Bereich (30) liegenden Flusssperren (2, 3, 4, 5), elektrisch leitendende Eigenschaften aufweist und zur Ausbildung eines Anlaufkäfigs für den Rotor dient.

3. Rotor nach einem der Ansprüche 1 oder 2, **dadurch gekennzeichnet, dass** das Füllmaterial der Flusssperren (2, 3, 4, 5), insbesondere der im äußeren Bereich (30) liegenden Flusssperren (2, 3, 4, 5), magnetisch nicht leitende Eigenschaften aufweist.

4. Rotor nach einem der vorhergehenden Ansprüche, **dadurch gekennzeichnet, dass** das Füllmaterial der Flusssperren (2, 3, 4, 5), insbesondere der im äußeren Bereich (30) liegenden Flusssperren, ein elektrisch leitendes und magnetisch nicht leitendes Material ist.

5. Rotor nach einem der vorhergehenden Ansprüche, **dadurch gekennzeichnet, dass** das Füllmaterial Aluminium oder eine Aluminiumlegierung umfasst.

6. Rotor nach einem der vorhergehenden Ansprüche, **dadurch gekennzeichnet, dass** alle unmittelbar an den äußeren Rotorumfang angrenzenden Flusssperren (2, 3, 4, 5) zumindest im Umfangsbereich mit dem Füllmaterial gefüllt sind.

7. Rotor nach Anspruch 1, **dadurch gekennzeichnet, dass** sich wenigstens eine, an einen gefüllten Bereich der Flusssperre (2, 3, 4, 5) angrenzende gekrümmte Kante in den gefüllten Bereich der Flusssperre (2, 3, 4, 5) hinein wölbt.

8. Rotor nach Anspruch 1 oder 7, **dadurch gekennzeichnet, dass** sich wenigstens eine, an einen nicht gefüllten Bereich der Flusssperre (2, 3, 4, 5) angrenzende gekrümmte Kante aus dem nicht gefüllten Bereich der Flusssperre heraus wölbt.

9. Reluktanzmaschine, insbesondere Synchron-Reluktanzmaschine, mit wenigstens einem Rotor nach einem der vorhergehenden Ansprüche, wobei die Maschine vorzugsweise keinen Frequenzumrichter zur Ansteuerung umfasst.

10. Verfahren zur Herstellung eines Rotors gemäß einem der Ansprüche 1 bis 8 zum Einsatz in einer Synchronreluktanzmaschine, wobei der Rotor zunächst mit äußeren Stegen (50) gefertigt, das Füllmaterial in die Flusssperren (2, 3, 4, 5) eingebracht wird und im Anschluss die äußeren Stege (50) entfernt werden.

11. Verfahren nach Anspruch 10, **dadurch gekennzeichnet, dass** die äußeren Stege (50) durch Überdrehen des Rotors entfernt werden.

12. Verfahren nach einem der Ansprüche 10 oder 11, **dadurch gekennzeichnet, dass** das Füllmaterial per Gußverfahren, insbesondere Druckgußverfahren, in die Flusssperren (2, 3, 4, 5) eingebracht, insbesondere eingepresst wird.

## Claims

1. Rotor for a reluctance machine comprising a cylindrical soft-magnetic element, wherein the soft-magnetic element is constructed from rotor laminations which have cutouts for forming flux barriers (2, 3, 4, 5), wherein one or more flux barriers (2, 3, 4, 5) is/are at least partially filled with a filler material, which filler material of these flux barriers (2, 3, 4, 5) reaches the rotor periphery and forms a portion of the rotor periphery, **characterized in that** the flux barriers (2, 3, 4, 5) of the rotor are at least partially filled with the filler material in such a way that a radially inner rotor region (20) with unfilled flux barrier regions or unfilled flux barriers (2, 3, 4, 5) and a radially outer region (30) with filled flux barrier regions or flux barriers (2, 3, 4, 5) are produced, wherein one or more flux barriers (2, 3, 4, 5) is/are divided into two or more by one or more webs (10), wherein at least some of these webs (10) have a curved edge which adjoins the flux barrier (2, 3, 4, 5), in particular an arcuate edge.

2. Rotor according to Claim 1, **characterized in that** the filler material of the flux barriers (2, 3, 4, 5), in particular the flux barriers (2, 3, 4, 5) which are situated in the outer region (30), has electrically conductive properties and serves to form a starting cage for the rotor.

3. Rotor according to either of Claims 1 and 2, **characterized in that** the filler material of the flux barriers (2, 3, 4, 5), in particular the flux barriers (2, 3, 4, 5) which are situated in the outer region (30), has magnetically non-conductive properties.

4. Rotor according to one of the preceding claims, **characterized in that** the filler material of the flux barriers (2, 3, 4, 5), in particular the flux barriers which are situated in the outer region (30), is an electrically conductive and magnetically non-conductive material.

5. Rotor according to one of the preceding claims, **characterized in that** the filler material comprises aluminium or an aluminium alloy.

6. Rotor according to one of the preceding claims, **characterized in that** all of the flux barriers (2, 3, 4, 5) which directly adjoin the outer rotor periphery are filled with the filler material at least in the peripheral region.

7. Rotor according to Claim 1, **characterized in that** at least one curved edge which adjoins a filled region of the flux barrier (2, 3, 4, 5) bends into the filled region of the flux barrier (2, 3, 4, 5).

8. Rotor according to Claim 1 or 7, **characterized in that** at least one curved edge which adjoins a non-filled region of the flux barrier (2, 3, 4, 5) bends out of the non-filled region of the flux barrier.

9. Reluctance machine, in particular synchronous reluctance machine, comprising at least one rotor according to one of the preceding claims, wherein the machine preferably comprises no frequency converter for driving purposes.

10. Method for manufacturing a rotor according to one of Claims 1 to 8 for use in a synchronous reluctance machine, wherein the rotor is initially produced with outer webs, the filler material is introduced into the flux barriers (2, 3, 4, 5) and the outer webs (50) are then removed.

11. Method according to Claim 10, **characterized in that** the outer webs (50) are removed by over-rotation of the rotor.

12. Method according to either of Claims 10 and 11, **characterized in that** the filler material is introduced, in particular pressed, into the flux barriers (2, 3, 4, 5) by casting processes, in particular die-casting processes.

## Revendications

1. Rotor destiné à une machine à réluctance et comprenant un élément magnétique doux de construction cylindrique, l'élément magnétique doux comprenant des tôles de rotor qui comportent des évidements destinés à former des barrières anti-flux (2, 3, 4, 5), une ou plusieurs barrières anti-flux (2, 3, 4, 5) étant au moins partiellement remplies d'un matériau de remplissage, le matériau de remplissage de ces barrières anti-flux (2, 3, 4, 5) atteignant la circonférence du rotor et formant une partie de la circonférence du rotor, **caractérisé en ce que** les barrières anti-flux (2, 3, 4, 5) du rotor sont au moins partiellement remplies du matériau de remplissage de façon à obtenir une zone de rotor radialement intérieure (20) pourvue de zones de barrière anti-flux non remplies ou de barrières anti-flux non remplies (2, 3, 4 , 5) et une zone radialement extérieure (30) pourvue de zones de barrière anti-flux ou de barrières anti-flux remplies (2, 3, 4, 5), une ou plusieurs barrières anti-flux (2, 3, 4, 5) étant divisées en deux parties ou plus par une ou plusieurs nervures (10), au moins une partie de ces nervures (10) comportant un bord incurvé, en particulier ayant un bord en forme d'arc, adjacent à la barrière anti-flux (2, 3, 4, 5).

2. Rotor selon la revendication 1, **caractérisé en ce que** le matériau de remplissage des barrières anti-flux (2, 3, 4, 5), en particulier des barrières anti-flux (2, 3, 4, 5) situées dans la zone extérieure (30), présente des propriétés électriquement conductrices et sert à former une cage de démarrage du rotor.

3. Rotor selon l'une des revendications 1 ou 2, **caractérisé en ce que** le matériau de remplissage des barrières anti-flux (2, 3, 4, 5), en particulier des barrières anti-flux (2, 3, 4, 5) situées dans la zone extérieure (30), présente des propriétés magnétiquement non conductrices.

4. Rotor selon l'une des revendications précédentes, **caractérisé en ce que** le matériau de remplissage des barrières anti-flux (2, 3, 4, 5), en particulier des barrières anti-flux situées dans la zone extérieure (30), est un matériau électriquement conducteur et magnétiquement non conducteur.

5. Rotor selon l'une des revendications précédentes, **caractérisé en ce que** le matériau de remplissage comprend de l'aluminium ou un alliage d'aluminium.

6. Rotor selon l'une des revendications précédentes, **caractérisé en ce que** toutes les barrières anti-flux (2, 3, 4, 5) directement adjacentes à la circonférence extérieure du rotor sont remplies du matériau de remplissage au moins dans la zone circonférentielle.

7. Rotor selon la revendication 1, **caractérisé en ce qu'**au moins un bord incurvé adjacent à une zone remplie de la barrière anti-flux (2, 3, 4, 5) s'incurve jusque dans la zone remplie de la barrière anti-flux (2, 3, 4, 5) .

8. Rotor selon la revendication 1 ou 7, **caractérisé en ce qu'**au moins un bord incurvé adjacent à une zone non remplie de la barrière anti-flux (2, 3, 4, 5) s'incurve hors de la zone non remplie de la barrière anti-flux.

9. Machine à réluctance, en particulier machine à réluctance synchrone, comprenant au moins un rotor selon l'une des revendications précédentes, la machine ne comprenant de préférence aucun convertisseur de fréquence pour effectuer la commande.

10. Procédé de fabrication d'un rotor selon l'une des revendications 1 à 8 destiné à être utilisé dans une machine à réluctance synchrone, le rotor étant d'abord fabriqué avec des nervures extérieures (50), le matériau de remplissage étant introduit dans les barrières anti-flux (2, 3, 4, 5) puis les nervures extérieures (50) étant retirées.

11. Procédé selon la revendication 10, **caractérisé en ce que** les nervures extérieures (50) sont retirées par retournement du rotor.

12. Procédé selon l'une des revendications 10 ou 11, **caractérisé en ce que** le matériau de remplissage est introduit, en particulier enfoncé, dans les barrières anti-flux (2, 3, 4, 5) par un procédé de coulée, en particulier un procédé de coulée sous pression.
